# EUROPÄISCHE PATENTANMELDUNG

(11) **EP 0 603 525 A1**
(43) Veröffentlichungstag der Anmeldung: **29.06.1994**
(21) Anmeldenummer: 93118131.7
(22) Anmeldetag: 09.11.1993
(51) Int. Cl.: B01F 7/04, B01F 11/00

(54) **Mischkneter**

(30) Priorität: 24.11.1992 DE 4239424
(71) Anmelder: LIST AG, CH-4422 Arisdorf (CH)
(72) Erfinder: Schwenk, Walther, Dr., CH-4303 Kaiseraugst (CH)
(74) Vertreter: Weiss, Peter, Dr. rer. nat.

(57) **Zusammenfassung**

Bei einem Mischkneter zur Durchführung von mechanischen, chemischen und/oder thermischen Prozessen mit mindestens zwei achsparallelen rotierenden Wellen (5,6) sind zumindest auf der als Hauptwelle bezeichneten einen Welle Scheibenflächen (21) mit an ihrem Umfang angeordneten Knetbarren (25) vorgesehen, welche von Reinigungs- bzw. Knet- und Transportelementen bestrichen werden, die an der als Putzwelle bezeichneten anderen Welle angeordneten sind. Die Knetbarren zweier benachbarter Scheibenflächen auf der Hauptwelle halten einen Abstand (a) zueinander ein, durch welchen das Reinigungs- bzw. Knet- und Transportelement auf der Putzwelle hindurchfährt. Dabei sollen die Wellen und/oder das Gehäuse in Wellenlängsachse oszillierend hin und her bewegbar ausgebildet ist/sind.

## Beschreibung

Die vorliegende Erfindung betrifft einen Mischkneter zur Durchführung von mechanischen, chemischen und/oder thermischen Prozessen mit mindestens zwei achsparallelen rotierenden Wellen, wobei zumindest auf der als Hauptwelle bezeichneten einen Welle Scheibenflächen mit an ihrem Umfang angeordneten Knetbarren vorgesehen sind, welche von Reinigungs- bzw. Knet- und Transportelementen bestrichen werden, die an der als Putzwelle bezeichneten anderen Welle angeordneten sind, und wobei die Knetbarren zweier benachbarter Scheibenflächen auf der Hauptwelle einen Abstand zueinander einhalten, durch welchen das Reinigungs- bzw. Knet- und Transportelement auf der Putzwelle hindurchfährt, entsprechend P 41 18 884.5.

Mit diesem Mischkneter wird eine hervorragende Knetwirkung auf das Produkt bei gtleichzeitiger guter Abreinigung insbesondere der beheizten Flächen innerhalb des Mischkneters erzielt. Dennoch hat sich in der Praxis gezeigt, dass es am Gehäuse im Bereich der Knetbarrenunterbrechungen zu geringfügigen Nasenbildungen kommt.

Der vorliegenden Erfindung liegt die Aufgabe zugrunde, auch diese geringfügige Nasenbildung zu vermeiden.

Zur Lösung dieser Aufgabe führt, dass die beiden Wellen und/oder das Gehäuse in Wellenlängsachse oszillierend hin und her bewegbar ausgebildet ist/sind.

Hierdurch werden die Bildung von Nasen des zu behandelnden Produktes an der Gehäusewand wirkungsvoll vermieden.

Die oszillierende Bewegung erstreckt sich mindestens über die Breite des Spaltes zwischen den zusammenwirkenden Knetelementen.

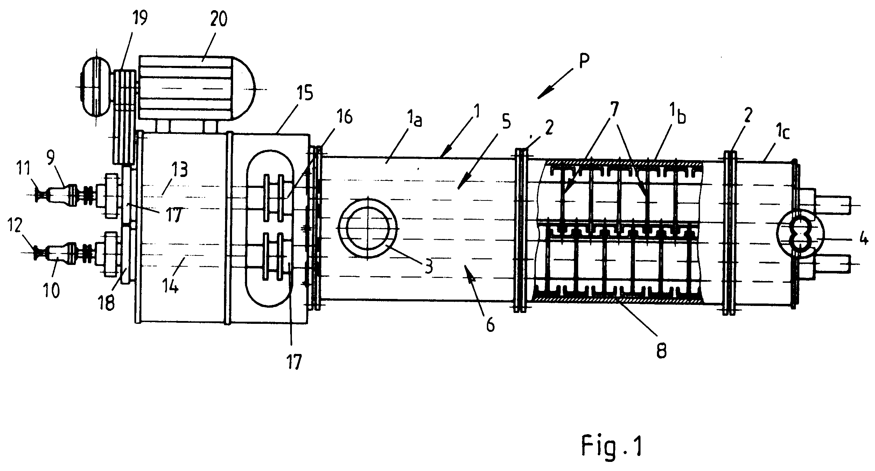

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine Draufsicht auf einen erfindungsgemässen Mischkneter mit einem teilweise aufgeschnittenen Gehäuse;
Fig. 2 eine Draufsicht auf einen Ausschnitt von zwei zusammenwirkenden Wellen;
Fig. 3 eine Draufsicht auf einen Ausschnitt einer Abwicklung der einen Welle gem. Fig.2;
Fig. 4 eine Draufsicht auf einen Ausschnitt einer Abwicklung der anderen Welle gem. Fig. 2;
Ein Mischkneter P weist gem. Fig. 1 ein Gehäuse 1 auf, welches aus mehreren Gehäuseabschnitten 1a, 1b und 1c besteht. Die Gehäuseabschnitte sind miteinander durch entsprechende Flanschverbindungen 2 gekoppelt. Im Gehäuseabschnitt 1a ist ein Aufgabestutzen 3 für ein in dem Mischkneter zu behandelndes Produkt und in dem Gehäuseabschnitt 1c ein Auslassstutzen 4 für das behandelte Produkt vorgesehen.

Das Produkt wird vom Aufgabestutzen 3 zum Auslassstutzen 4 mittels zweier Wellen 5 und 6 sowie daran angeordneten Knet- und Transportelementen 7 transportiert. Während des Transportes findet eine Mischung und Knetung des Produktes sowie bevorzugt eine thermische Behandlung statt. Hierzu sind die Wellen 5 und 6 und gegebenenfalls auch die Knet- und Transporteelemente 7 sowie, nicht näher gezeigt, die Gehäusewandung 8 beheizt. Zum Einbringen eines Heizmediums in die Wellen 5 und 6 und von dort gegebenenfalls in das Innere der Knet- und Transportelemente 7 sind Anschlüsse 9 und 10 vorgesehen, wobei diese Anschlüsse 9 und 10 um entsprechende Auslässe 11 und 12 für das durch die Wellen 5 und 6 geführte Heizmedium angeordnet sind. Eine entsprechende Führung des Heizmediums in Mantelflächen der Wellen 5 und 6 und eine entsprechende Rückführung durch die Auslassnippel 11 und 12 sind Stand der Technik und werden deshalb nicht weiter beschrieben.

Zwischen den Anschlüssen 9 und 10 durchgreifen mit den Wellen 5 und 6 verbundene Wellenzapfen 13 und 14 eine Laterne 15, wobei gegen das Gehäuse 1 jeweils eine Stopfbüchse 16 und 17 zur Abdichtung der Welle 5 bzw. 6 vorgesehen ist. Die Wellenzapfen 13 und 14 sind ausserhalb der Laterne über entsprechende Getriebeelemente 17 und 18, beispielsweise Zahnräder, miteinander gekoppelt, wobei das Getriebeelement 17 über ein Getriebe 19 mit einem Antrieb 20 verbunden ist. Über diesen Antrieb 20 und das Getriebe 19 wird zumindest das Getriebeelement 17 in Drehbewegung versetzt, welche auf die Welle 5 übertragen wird. Eine Übertragung dieser Drehbewegung auf das Getriebeelement 18 kann gleich- oder gegensinnig sowie mit gleicher oder unterschiedlicher Drehzahl erfolgen. Entsprechende Übersetzungsgetriebe sind handelsüblich und sollen hier nicht näher beschrieben sein.

Wesentlich im Rahmen der vorliegenden Erfindung ist die Ausgestaltung der Knet- und Transportelemente 7 und ihre Anordnung auf den Wellen 5 und 6. Der Übersichtlichkeit halber wird im folgenden die Welle 5 auch als Hauptwelle und die Welle 6 auch als Putzwelle bezeichnet. Jeder Welle 5 bzw. 6 sind Knet- und Transportelemente 7 aufgesetzt, welche als Basis zur jeweiligen Welle 5 bzw. 6 hin Scheibenflächen 21 besitzen. In der P 41 18 884.5 sind verschiedene Ausführungsbeispiele von Scheibenflächen 21 gezeigt.

Da bevorzugt die Knet- und Transportelemente 7 sowohl auf der Hauptwelle 5 als auch auf der Putzwelle 6 bis auf die Ausgestaltung der Scheibenflächen 21 identisch ausgebildet sind, sollen sie nachfolgend mit den gleichen Bezugszahlen versehen sein. Dies lässt natürlich im Rahmen der vorliegenden Erfindung offen, dass die Knet- und Transportelemente 7 auf der Hauptwelle 5 anders ausgestaltet sind als diejenigen auf der Putzwelle 6.

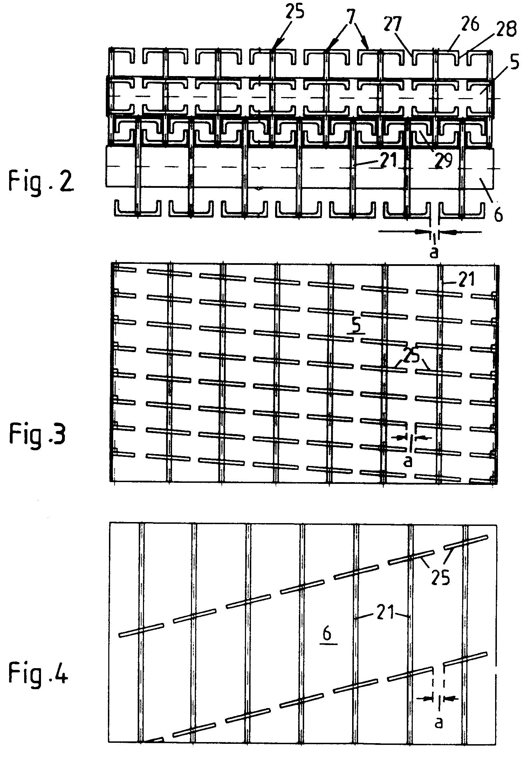

Wesentlich ist, dass sich auf dem Scheibenflächenumfang 23 sowohl der Hauptwelle 5 wie auch, sofern eine Scheibenfläche 21 vorgesehen ist, der Putzwelle 6 Knetbarren 25 befinden, welche U-förmig ausgestaltet sind. D.h., ein eigentlicher Tragschenkel 26 sitzt auf dem Scheibenflächenumfang 23, während zur jeweiligen Welle 5 bzw. 6 hin von diesem Tragschenkel 26 beidseits Flügel 27 und 28 abragen. Auf diese Weise ergibt dann ein Knet- und Transportelement 7, wie insbesondere in Fig. 2 gezeigt, welches bei einer Draufsicht eine T-förmige Ausgestaltung aufweist.

Wesentlich ist ferner, dass zwei benachbarte Knet- und Transportelemente 7 bzw. deren benachbarte Flügel 27 einen Abstand a voneinander einhalten, der es erlaubt, dass eine Scheibenfläche 21 der gegenüberliegenden Welle 5 bzw. 6 durch ihn hindurchfahren kann. Dementsprechend ist dieser Abstand a geringfügig grösser als die Dicke d einer Scheibenfläche 21.

Ferner sind die Scheibenflächen 21 von Hauptwelle 5 und Putzwelle 6 versetzt zueinander angeordnet. Vorzugsweise ist dieser Versatz so, dass eine Scheibenfläche 21 der Putzwelle 6 etwa mittig zwischen zwei Scheibenflächen 21 der Hauptwelle 5 eingreift. Allerdings kann dieser Versatz auch aussermittig erfolgen, wobei dann entsprechend unterschiedlich breite Kneträume 29 entstehen. Bevorzugt wird allerdings die Ausgestaltung gleicher Kneträume 29.

In Fig. 3 und 4 ist erkennbar, dass die Knetbarren 25 im Verhältnis zur Axialrichtung der Wellen 5 bzw. 6 schräg angestellt sind. Hierdurch wird die Transportwirkung verbessert.

In der Praxis hat sich nun herausgestellt, dass sich an der Gehäusewand im Bereich der unterbrochenen Knetelemente 25, 26 stehenbleibendes Produkt in Form von Nasen aufbaut. Um dies zu verhindern, sollen die Rotationsbewegungen der beiden Wellen 5 und 6 durch eine Oszillation in Längsrichtung überlagert werden. D.h., die Wellen bewegen gemeinsam mindestens um die Spaltbreite a in Wellenlängsachse hin und her. Hierdurch wird eine vollständige Überstreichung der Gehäusewand durch die Knetelemente 25, 26 erreicht und somit eine Bildung von Produktnasen an der Gehäusewand vermieden.

## Patentansprüche

1. Mischkneter zur Durchführung von mechanischen, chemischen und/oder thermischen Prozessen mit mindestens zwei achsparallelen rotierenden Wellen, wobei zumindest auf der als Hauptwelle bezeichneten einen Welle Scheibenflächen mit an ihrem Umfang angeordneten Knetbarren vorgesehen sind, welche von Reinigungs- bzw. Knet- und Transportelementen bestrichen werden, die an der als Putzwelle bezeichneten anderen Welle angeordneten sind, und wobei die Knetbarren zweier benachbarter Scheibenflächen auf der Hauptwelle einen Abstand zueinander einhalten, durch welchen das Reinigungs- bzw. Knet- und Transportelement auf der Putzwelle hindurchfährt, entsprechend P 41 18 884.5,
dadurch gekennzeichnet,
dass die Wellen (5 und 6) und/oder das Gehäuse (1) in Wellenlängsachse oszillierend hin und her bewegbar ausgebildet ist/sind.

2. Mischkneter nach Anspruch 1, dadurch gekennzeichnet, dass die oszillierende Bewegung mindestens in der Breite des Spaltes (a) erfolgt.
